# EUROPÄISCHE PATENTSCHRIFT

(11) **EP 2 848 463 B1**
(45) Veröffentlichungstag und Bekanntmachung des Hinweises auf die Patenterteilung: **24.02.2016**
(21) Anmeldenummer: 14181555.5
(22) Anmeldetag: 20.08.2014
(51) Int. Cl.: B60N 2/50, B60N 2/16

(54) **Fahrzeugsitz mit Horizontaldämpfungseinrichtung**
Vehicle seat with horizontal damping device
Siège de véhicule pour un dispositif d'amortissement horizontal

(30) Priorität: 02.09.2013 DE 102013109529
(43) Veröffentlichungstag der Anmeldung: 18.03.2015
(73) Patentinhaber: GRAMMER AG, 92224 Amberg (DE)
(72) Erfinder: Riedl, Michael, 93128 Regenstauf (DE)
(74) Vertreter: Hannke, Christian

(56) Entgegenhaltungen:
- EP-B1- 0 054 947
- US-A- 4 351 556

## Beschreibung

Die vorliegende Erfindung betrifft einen Fahrzeugsitz umfassend ein in horizontaler Richtung gegenüber einem höhenverstellbaren Sitzunterteil bewegliches Sitzoberteil, wobei das Sitzunterteil zwischen dem Sitzoberteil und einem Fahrzeugboden angeordnet ist und das Sitzoberteil mit dem Fahrzeugboden mechanisch verbindet, und umfassend zumindest eine Horizontaldämpfungseinrichtung zum Dämpfen von in horizontaler Richtung in das Sitzoberteil eingeprägten Schwingungen, gemäß dem Oberbegriff des Patentanspruches 1.

Ein derartiger Fahrzeugsitz ist aus der US 4 351 556 A bekannt. Weitere derartige Fahrzeugsitze, insbesondere umfassend die genannte Horizontaldämpfungseinrichtung, sind aus dem Stand der Technik wohl bekannt. Beispielsweise basieren derartige Horizontaldämpfungseinrichtungen auf zumindest einem druckluftbasierten Federelement, welches in horizontaler Richtung Beschleunigungen und/oder Vibrationen des Sitzunterteils und/oder des Sitzoberteils gegenüber dem Fahrzeugboden abfedert. Derartige und bisher bekannte Dämpfer sind jedoch wenig betriebsstabil und weisen bereits nach kurzer Betriebsdauer oftmals Leckagen auf, wodurch zumindest ein Teil der Dämpfungseigenschaften des Dämpfers verloren gehen kann. Darüber hinaus sind derartige Dämpfer nur sehr schwer in Bezug auf die Größe der abzudämpfenden Schwingungen einstellbar. Für gewöhnlich sind solche Dämpfer in ihrer Dämpfungskraft nämlich im Wesentlichen konstant ausgebildet, so dass der Dämpfer - ob bei kleinen Hüben oder großen Hüben - dieselbe Dämpfkraft in das Sitzoberteil oder das Sitzunterteil einspeist. Insofern sind bisher bekannte Horizontaldämpfungseinrichtungen fehleranfällig sowie nicht individuell an die jeweiligen auf das Sitzoberteil oder das Sitzunterteil einwirkenden Schwingungen von selbst, d.h. ohne beispielsweise händische Nachjustage, einstellbar.

Es ist daher eine Aufgabe der vorliegenden Erfindung, einen Fahrzeugsitz anzugeben, welcher eine Horizontaldämpfungseinrichtung aufweist, die zum einen besonders betriebsstabil ist und zum anderen sich von selbst, d.h. ohne eine zusätzliche externe Maßnahme, wie zum Beispiel einen händischen Einstellen oder einen elektronischen Steuerchip in seiner Dämpfungskraft, entsprechend der auf die Horizontaldämpfungseinrichtung einwirkenden Schwingungshöhe, in seiner Dämpfungskraft anpasst und einstellt.

Diese Aufgabe wird durch den Gegenstand des Patentanspruches 1 gelöst. Vorteilhafte Ausgestaltungen sind in den abhängigen Ansprüchen beschrieben.

Um nun einen Fahrzeugsitz umfassend eine Horizontaldämpfungseinrichtung zum Dämpfen von in horizontaler Richtung in das Sitzoberteil eingeprägten Schwingungen anzugeben, der zum einen besonders betriebsstabil ist und sich zum anderen von selbst an die Größe der eingeprägten Schwingungen anpasst, macht die vorliegende Erfindung unter anderem von der Idee Gebrauch, dass die Horizontaldämpfungseinrichtung einen in horizontaler Richtung aufgespannten und unter Vorspannung an dem Sitzunterteil oder dem Sitzoberteil befestigten Spannriemen sowie ein drehbar an dem Sitzunterteil oder dem Sitzoberteil gelagertes Exzenter-Element umfasst, wobei das Exzenter-Element derart mit dem Spannriemen in Eingriff steht und gelagert ist, dass das Exzenter-Element in horizontaler Richtung aus einer Nulllage in horizontaler Richtung selbstrückstellend und abrollbar an dem Spannriemen gelagert ist.

Insofern ist mittels des Zusammenspiels aus dem hier beschriebenen Exzenter-Element sowie dem hier beschriebenen vorgespannten Spannriemen eine Horizontaldämpfungseinrichtung angegeben, welche vollkommen ohne ein Dämpfungselement auskommen kann. Die dämpfenden Eigenschaften eines Dämpfungselementes sind vielmehr ersetzt durch die Einwirkung des Exzenter-Elementes auf den vorgespannten Spannriemen. Je stärker nämlich eine Auslenkung des Exzenter-Elementes und damit eine Wegverschiebung und/oder Verformung des vorgespannten Spanngurtes aus seiner Null-Position ist, desto stärker wirken Kräfte auf das Exzenter-Element, die dafür sorgen, dieses wieder, d.h. selbstrückstellend, in die Null-Position zurückzustellen. Ein derartiges Zurückstellen wirkt daher einer Schwingungsbewegung in horizontaler Richtung automatisch entgegen, wodurch eine Dämpfungsfunktion der Horizontaldämpfungseinrichtung ermöglicht wird. Insbesondere kann gelten, dass - je stärker ein Drehwinkel des Exzenter-Elementes ausfällt - desto stärker eine Auslenkung und/oder eine Verformung des Spannriemens Abweichend von einer Null-Position ist. Je stärker sich jedoch der Spannriemen neben der bereits ständig vorhandenen Vorspannung zusätzlich durch das Exzenter-Element ausgedehnt und verdehnt wird, desto größer ist eine Rückstellkraft des Spannriemens auf das Exzenter-Element bemessen. Zudem ist die Dämpfungshöhe ganz besonders einfach im Voraus einstellbar. Einzustellen ist nämlich zumindest nur eine entsprechende Vorspannung des Spannriemens. Je höher nämlich bereits die Vorspannung des Spannriemens eingestellt wird, desto höher ist auch bei einer Auslenkung des Spannriemens von einer Null-Position dessen auf das Exzenter-Element übertragene Rückstellkraft. Insofern können über die Einstellung der Vorspannung in besonders einfacher Art und Weise die Dämpfungseigenschaften der hier beschriebenen Horizontaldämpfungseinrichtung an die speziellen Bedürfnisse des Benutzers angepasst werden. Darüber hinaus kann durch die vorliegende Horizontaldämpfungseinrichtung auf einen Endanschlag vollständig verzichtet sein. Ein solcher ist nämlich gar nicht nötig, da ein Ausklinken durch das in horizontaler Richtung abrollbare Exzenter-Element an dem Spannriemen gar nicht möglich ist.

Gemäß zumindest einer Ausführungsform umfasst der Fahrzeugsitz ein in horizontaler Richtung gegenüber einem höhenverstellbaren Sitzunterteil bewegliches Sitzoberteil, wobei das Sitzunterteil zwischen dem Sitzoberteil und einem Fahrzeugboden angeordnet ist und dieses das Sitzoberteil mit dem Fahrzeugboden mechanisch verbindet. Darüber hinaus umfasst der Fahrzeugsitz zumindest eine Horizontaldämpfungseinrichtung zum Dämpfen von in horizontaler Richtung in das Sitzoberteil eingeprägten Schwingungen. Weiter umfasst die Horizontaldämpfungseinrichtung einen in horizontaler Richtung aufgespannten und unter Vorspannung an dem Sitzunterteil oder dem Sitzoberteil befestigten Spannriemen sowie ein drehbar an dem Sitzunterteil oder dem Sitzoberteil gelagertes Exzenter-Element, wobei das Exzenter-Element derart mit dem Spannriemen in Eingriff steht und gelagert ist, dass das Exzenter-Element in horizontaler Richtung aus einer Nulllage, in horizontaler Richtung selbstrückstellend und abrollbar an dem Spannriemen gelagert ist.

Gemäß zumindest einer Ausführungsform ist der Spannriemen zwischen zwei in horizontaler Richtung beanstandet zueinander angeordneten und an dem Sitzunterteil oder dem Sitzoberteil befestigten Fixierelementen eingespannt und das Exzenter-Element ist drehbar um eine mit dem Sitzoberteil und/oder dem Sitzunterteil mechanisch fest verbundene Drehachse gelagert, wobei über eine Drehung des Exzenter-Elementes um die Drehachse eine dem Spannriemen zugewandte Abrollfläche des Exzenter-Elementes zumindest teilweise an dem Spannriemen abrollbar ist. Bewegt sich beispielsweise bei einer Beschleunigung des Fahrzeuges das Sitzoberteil nach hinten in horizontaler Richtung, so entsteht daher eine Relativbewegung zwischen dem Sitzoberteil und dem fest mit dem Fahrzeugboden verbundenen Sitzunterteil. Dadurch, dass die Abrollfläche des Exzenter-Elementes vorzugsweise schlupffrei mit einer Abrollfläche des Spannriemens in vorzugsweise unmittelbarem Eingriff steht und die Drehachse statisch und fest beispielsweise an dem Sitzunterteil befestigt ist, kann das Sitzoberteil derart mit dem Exzenter-Element angeordnet sein, dass die Horizontalbewegung des Sitzoberteils in Richtung nach hinten in eine Drehbewegung des Exzenter-Elementes um die feste Drehachse umgewandelt wird. Insofern wird die Abrollfläche des Exzenter-Elementes an einer Abrollfläche des Spannriemens durch die Drehung um die Drehachse abgerollt, wobei während des Rollvorgangs die Drehachse an dem Sitzunterteil statisch und fest montiert ist. Mit anderen Worten kann das Exzenter-Element durch das Sitzoberteil und das Sitzunterteil über einen Anschlusspunkt des Sitzoberteils an einem Exzenter-Element in einem vorgebbaren Abstand zur Drehachse sowie über die Drehachse selbst mit dem Sitzunterteil in Wirkverbindung gebracht werden.

Gemäß zumindest einer Ausführungsform bildet zumindest die Abrollfläche in horizontaler Richtung eine Einhüllende einer Ellipse. Eine derartige von einem idealen Kreis abweichende Ausgestaltung der Abrollfläche des Exzenter-Elements stellt sicher, dass ein Abstand einer Berührungsfläche zwischen dem Exzenter-Element und dem Spannriemen, welche ein Teil der Abrollfläche ist, sich zu der Drehachse abhängig von dem jeweiligen Drehwinkel des Exzenter-Elements vergrößert oder verringert. Jedenfalls ist ein Abstand der Berührungsfläche von der jeweiligen Dreh- und Winkelstellung des Exzenter-Elementes, d.h. von der jeweiligen Größe der horizontalen Auslenkung des Sitzoberteiles zu dem Sitzunterteil, abhängig. Mit anderen Worten ist ein derartiger Abstand der Berührungsfläche von der Drehachse selbst abhängig von dem Grad der Winkelverdrehung des Exzenter-Elements. Aufgrund dieser Abhängigkeit wird vorzugsweise bei größeren Winkelauslenkungen des Exzenter-Elementes um die Drehachse auch der Abstand der Berührungsfläche von der Drehachse größer. Wird nun der Abstand der Berührungsfläche von der Drehachse entsprechend des größeren Drehwinkels größer, erhöht sich auch die Spannung und Verdehnung des Spannriemens, der einer derartigen Erhöhung und damit einer derartigen Winkelverstellung des Exzenter-Elements stets entgegenwirkt. Eine derartige Entgegenwirkung gegen eine Verdrehung des Exzenter-Elementes wirkt daher automatisch einer horizontalen Bewegung des Sitzoberteil relativ zum Sitzunterteil sowohl in Fahrtrichtung als auch entgegen der Fahrtrichtung entgegen und wirkt gleichzeitig aufgrund der ellipsoiden Ausgestaltung der Abrollfläche des Exzenter-Elements ebenso in besonders einfacher Art und Weise selbstrückstellend. Eine derartige Selbstarretierung ist daher trotz eines vollständigen Verzichts auf irgendwelche Dämpferelemente erreicht.

Gemäß zumindest einer Ausführungsform weist die Abrollfläche des Exzenter-Elementes zumindest stellenweise Verzahnungen auf, welche zumindest teilweise in Verzahnungen des Spannriemens eingreifen können. Insbesondere kann der Spannriemen in Form eines Zahnriemens ausgebildet sein. Eine derartige Ausbildung der Abrollflächen in Form der Verzahnung sorgt daher für ein noch einfacher herzustellendes, schlupffreies Abrollen der Abrollfläche auf der Abrollfläche des Spannriemens.

Gemäß zumindest einer Ausführungsform ist das Sitzoberteil in horizontaler Richtung entlang von an dem Sitzunterteil befestigen Führungsschienen relativ zu dem Sitzunterteil beweglich gelagert. Alternativ oder zusätzlich können die Führungsschienen auch an dem Sitzoberteil angebracht sein. Grundsätzlich können die Führungsschienen daher einen Schlittenmechanismus bilden, mittels dessen das Sitzoberteil entlang dem Sitzunterteil in horizontaler Richtung entlanggleiten kann.

Gemäß zumindest einer Ausführungsform ist ein Abstand der Drehachse von der Abrollfläche des Exzenter-Elementes in horizontaler Richtung und/oder in einer zur horizontalen Richtung quer verlaufenden Breitenrichtung einstellbar. Mittels einer derartigen Einstellung eines solchen Abstandes kann daher insbesondere eine Kraft-Weg-Kennlinie der Horizontaldämpfungseinrichtung eingestellt werden. Zusätzlich bietet eine derartige Einstellbarkeit die Möglichkeit, die Vorspannung je nach den individuellen Wünschen des Benutzers zu arretieren.

Gemäß zumindest einer Ausführungsform weist das Exzenter-Element eine in vertikaler Richtung durchgehende Öffnung auf, welche einen Verstellbereich des Abstandes der Drehachse von der Abrollfläche des Exzenter-Elementes festlegt. Insbesondere kann es sich bei der Öffnung um eine in einer Draufsicht oval oder ellipsoid ausgestaltete Öffnung handeln, so dass innerhalb einer derartigen Öffnungsellipse das Exzenter-Element bei stets fixierter Drehachse verschiebbar gelagert ist. Eine derartige Öffnung bietet daher die Möglichkeit einer Feinjustage der Kraft-Weg-Kennlinie im Hinblick auf Größe der Vorspannung des Spannriemens sowie im Hinblick auf eine Steigung der Kraft-Weg-Kennlinie der gesamten Horizontaldämpfungseinrichtung, so dass durch eine derartige Einstellbarkeit durch die besonders einfach auszugestaltende und herzustellende Öffnung in dem Exzenter-Element eine noch bessere individuelle Anpassbarkeit und Einstellbarkeit ermöglicht ist.

Gemäß zumindest einer Ausführungsform ist an dem Exzenter-Element zumindest eine Ausgleichsmasse zum Ausgleichen der Schwingungen des Sitzoberteils und/oder des Exzenter-Elementes angeordnet. Mit anderen Worten handelt es sich bei der Ausgleichsmasse um eine zusätzlich an dem Exzenter-Element angeordnete oder zumindest teilweise in das Exzenter-Element integrierte zusätzliche Dämpfungsoption, welche ein vorgebbares Trägheitsmoment aufweist, das der Drehbewegung (insbesondere einer Winkelbeschleunigung) des Exzenter-Elements entgegenwirkt und daher ebenso dämpfend wirkt. Insofern addieren sich in besonders vorteilhafter Art und Weise synergetisch die Rückstelleigenschaften der Horizontaldämpfungseinrichtung sowie die Dämpfungseigenschaften der Ausgleichsmasse.

Gemäß zumindest einer Ausführungsform ist die Ausgleichsmasse an einem dem Spannriemen in Breitenrichtung gegenüberliegenden Hebelbereich des Exzenter-Elementes angeordnet. "Breitenrichtung" ist dabei eine Richtung quer zu der horizontalen Richtung in einer Haupterstreckungsebene des Sitzoberteils und/oder des Sitzunterteils. Dabei bezeichnet ein Hebelbereich des Exzenter-Elementes denjenigen Bereich des Exzenter-Elements, welcher gegenüber der Abrollfläche des Exzenter-Elementes bezogen auf die Drehachse des Exzenter-Elementes angeordnet und ausgebildet ist. Insbesondere ist nämlich der Hebelbereich derjenige Bereich, welcher hebelartig um die Drehachse radial hin und her schwingt, sofern das Sitzoberteil sich in horizontaler Richtung gegenüber dem Sitzunterteil bewegt. Eine derartige hebelartige Ausgestaltung des Exzenter-Elementes wirkt daher als ein weiteres dämpfendes Element durch dessen Trägheit.

Gemäß zumindest einer Ausführungsform ist an dem Hebelbereich des Exzenter-Elementes zumindest ein Dämpfungselement verbaut und steht mit dem Hebelbereich in Wirkverbindung, wobei das Dämpfungselement einer Drehbewegung des Hebelbereiches zumindest in horizontaler Richtung zumindest teilweise entgegenwirkt. Wird nun eine Bewegung des Sitzoberteiles gegenüber dem Sitzunterteil durch in den Fahrzeugsitz eingeprägte Horizontal-Schwingungen generiert, bewegt sich - wie obig bereits mehrmals dargelegt - das Exzenter-Element drehend um die Drehachse. Dabei schwingt der Hebelbereich in diejenige Richtung, in die das Sitzoberteil durch die eingeleiteten Schwingungen gedrängt wird. Ist nun das Dämpfungselement mit einem Ende an einem Ende des Hebelbereiches angebracht und mit seinem anderen Ende beispielsweise mechanisch fest an dem Sitzoberteil oder dem Sitzunterteil befestigt, wird durch eine derartige Drehbewegung des Exzenter-Elementes und insbesondere eine Bewegung des Endes des Hebelbereiches das Dämpfungselement beispielsweise gespannt oder gequetscht. Das Dämpfungselement kann daher einer derartigen Spannbewegung oder Dehnbewegung des Endes des Hebelbereiches besonders effektiv entgegenwirken. In einer derartigen Ausgestaltung wird daher die Dämpfung durch eine zumindest zwei-komponentige Dämpfungsfunktion generiert. Eine erste Dämpfungskomponente ist geschaffen durch die Dämpfungsfunktion des Spannriemens in Zusammenwirken mit der Abrollfläche des Exzenter-Elementes an sich. Eine weitere Dämpfungsfunktion bildet das Dämpfungselement - wie obig bereits beschrieben -als eine zweite Komponente der Dämpfung.

Im Folgenden werden der hier beschriebene Fahrzeugsitz und insbesondere die hier beschriebene Horizontaldämpfungseinrichtung anhand von Ausführungsbeispielen und den dazugehörigen Figuren näher erläutert.

Die Figuren 1A - 4B zeigen in schematischen Seitenansichten und Draufsichten jeweils ein Ausführungsbeispiel eines hier beschriebenen Fahrzeugsitzes.

Die Figur 5 zeigt in einer schematischen Ansicht ein Kraft-Weg-Diagramm, sowie rein schematisch eine Einstellbarkeit der Kraft-Weg-Kennlinie.

In den Ausführungsbeispielen und in den Figuren sind gleiche oder gleichwirkende Bestandteil jeweils mit dem gleichen Bezugszeichen versehen. Die dargestellten Elemente sind nicht als maßstabsgerecht anzusehen, vielmehr können einzelne Elemente zum besseren Verständnis übertrieben groß dargestellt sein.

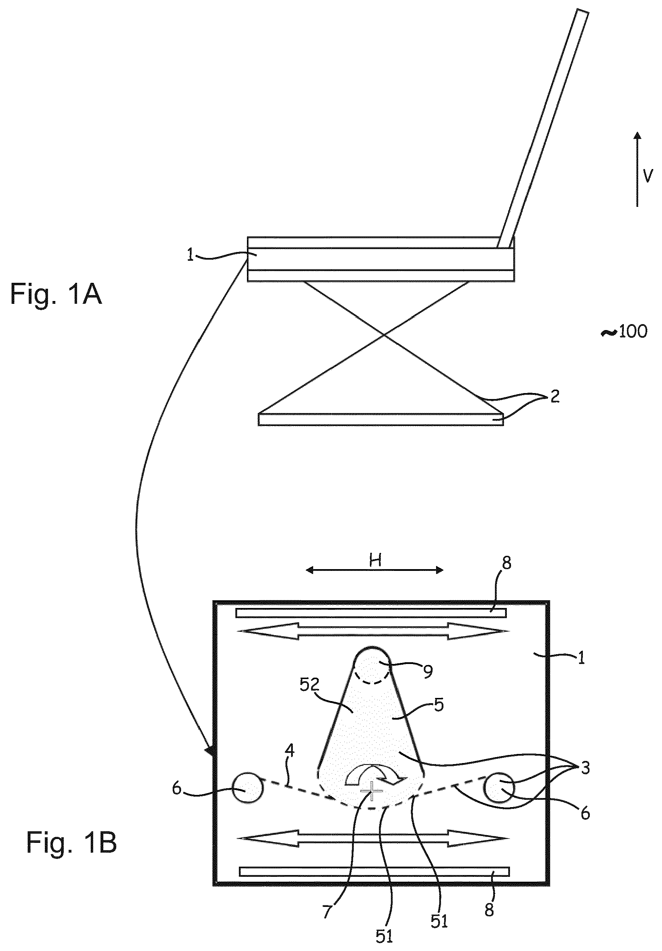

In der Figur 1A ist anhand einer schematischen Seitenansicht ein Ausführungsbeispiel eines hier beschriebenen Fahrzeugsitzes 100 gezeigt. Der Fahrzeugsitz 100 umfasst ein in horizontaler Richtung H bewegliches Sitzoberteil 1 sowie ein zwischen dem Sitzoberteil 1 und einem Fahrzeugboden angeordnetes höhenverstellbares Sitzunterteil 2. Wie ebenso aus der Figur 1 unmittelbar erkannt werden kann, ist das Sitzoberteil 1 mit dem Fahrzeugboden über das Sitzunterteil 2 mechanisch fest verbunden, wobei sich das Sitzoberteil 1 gegenüber dem Sitzunterteil 2 in der horizontalen Richtung H verschieben kann.

In der Figur 1B ist in einer schematischen Draufsicht der in der Figur 1 gezeigte Fahrzeugsitz 100 umfassend eine hier beschriebene Horizontaldämpfungseinrichtung 3 gezeigt. Dabei ist die Horizontaldämpfungseinrichtung 3 dazu vorgesehen und dazu eingerichtet, in das Sitzoberteil 1 eingeprägte Schwingungen in horizontaler Richtung H gegenüber dem Sitzunterteil 2 zu dämpfen.

Dabei ist erkennbar, dass die Horizontaldämpfungseinrichtung 3 einen in horizontaler Richtung H aufgespannten und unter Vorspannung mit dem Sitzunterteil 2 verbundenen Spannriemen 4 umfasst. Die horizontale Richtung H bezeichnet dabei die Fahrtrichtung. Dabei ist der Spannriemen 4 zwischen zwei in der horizontalen Richtung H beanstandet zueinander angeordneten und an dem Sitzunterteil 2 befestigten Fixierelementen 6 eingespannt. Wie durch den Pfeil in der Figur 1A angedeutet, umfasst die Horizontaldämpfungseinrichtung 3 weiter ein Exzenter-Element 5, wobei das Exzenter-Element 5 derart mit dem Spannriemen 4 in Eingriff steht und gelagert ist, dass das Exzenter-Element 5 in horizontaler Richtung H aus einer Null-Lage selbstrückstellend und abrollbar an einem Spannriemen 4 gelagert ist. Insbesondere ist erkennbar, dass das Exzenter-Element 5 drehbar um eine mit dem Sitzunterteil 2 mechanisch fest verbundene Drehachse 7 gelagert ist, wobei über eine Drehung des Exzenter-Elementes 4 um die Drehachse 7 eine dem Spannriemen 4 zugewandte Abrollfläche 51 des Exzenter-Elementes 4 zumindest teilweise an einem Spannriemen 4 abrollbar ist (durch Pfeil angedeutet). Zudem bildet die Abrollfläche 51 in horizontaler Richtung H in einer Draufsicht eine Einhüllende eine Ellipse. Mit anderen Worten ist ein Abstand einer Berührungsfläche zwischen dem Exzenter-Element 5 und dem Spannriemen 4 abhängig von der Drehstellung des Exzenter-Elementes um die Drehachse 7. Durch die Ellipse ist daher sichergestellt, dass - je größer die Drehverstellung des Exzenter-Elementes 5 von der NullLage abweicht durch die ellipsoid ausgestaltete Abrollfläche 51 - ebenso eine Berührungsfläche einen größeren Abstand zu der Drehachse 7 aufweist. Mit anderen Worten wird - je größer die Winkelverdrehung des Exzenter-Elementes 5 ist - auch der Spannriemen 4 in diesem Maße aus seiner Null-Position (oder Vorspannposition) ausgelenkt.

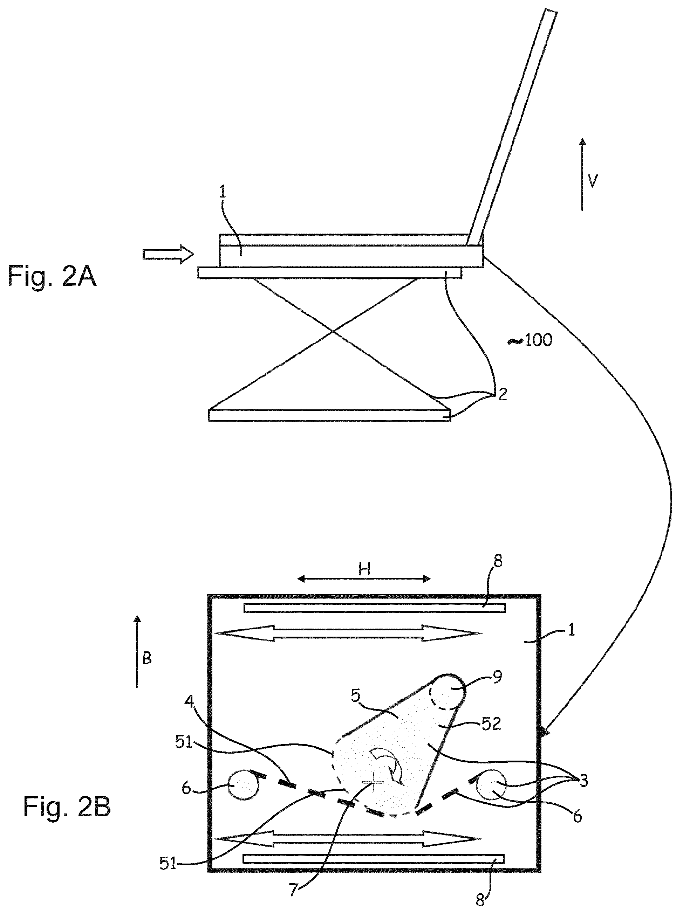

Eine derartige Auslenkung ist besonders eingängig in den Figuren 2A und 2B gezeigt. Insbesondere ist aus der Draufsicht der Figur 2B ein ausgelenkter Zustand des Sitzoberteils 1 gegenüber dem Sitzunterteil 2 gezeigt, wobei das Exzenter-Element 5 eine um ein vorgebbares Radialmaß gedrehte Drehbewegung um die fest mit dem Sitzunterteil 2 verbundene Drehachse 7 durchführt. Darüber hinaus ist das Sitzoberteil 1 entlang von sich in horizontaler Richtung H erstreckenden Führungsschienen 8 schiebebeweglich an dem Sitzunterteil 2 gelagert.

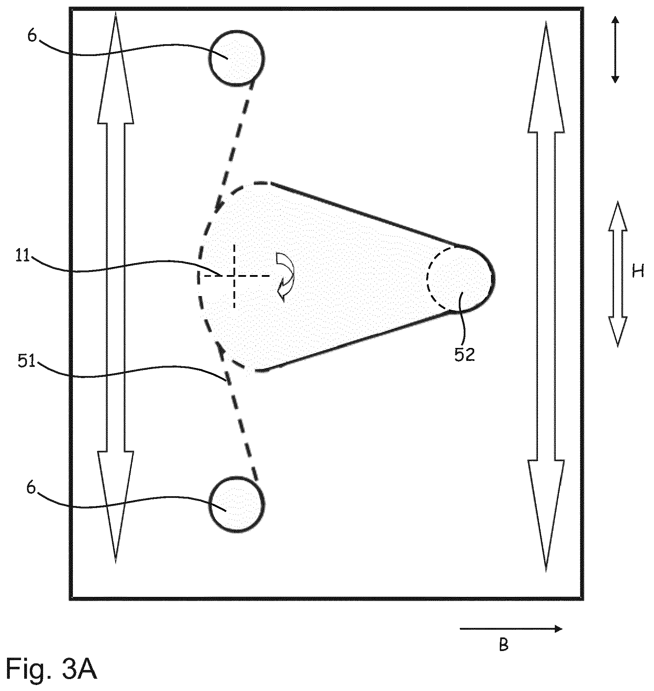

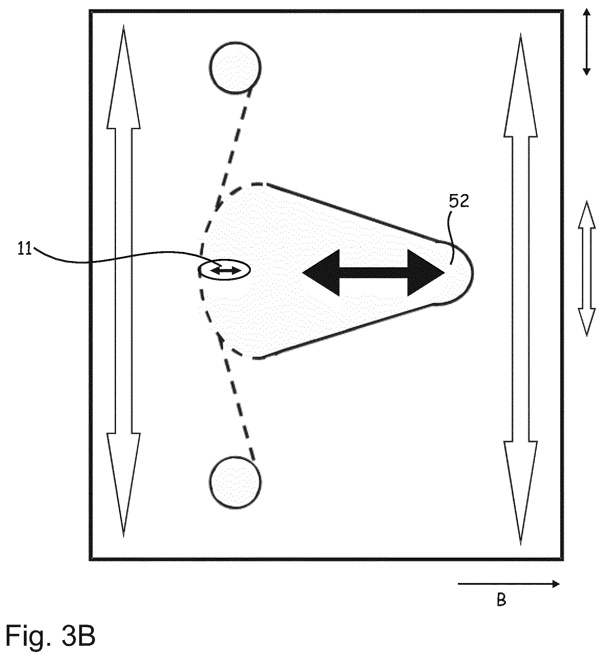

Die Figuren 3A und 3B zeigen in einer schematischen Draufsicht ein weiteres Ausführungsbeispiel einer hier beschriebenen Horizontaldämpfungseinrichtung 3. Im Unterschied zu dem Ausführungsbeispiel gemäß den Figuren 1A bis 2B weist das Exzenter-Element 5 zusätzlich eine in vertikaler Richtung V durchgehende Öffnung 11 in Form einer Ellipse auf, welche einen Verstellbereich eines Abstands der Drehachse 7 von der Abrollfläche 51 des Exzenter-Elementes 5 festlegt. Dabei ist die Drehachse 7 durch die Öffnung 11 hindurchgeführt. Mit anderen Worten ist der Verstellbereich durch die Ausdehnung der Öffnung 11 definiert und festgelegt. Mittels der hier beschriebenen Öffnung 11 ist es in besonders einfacher Art und Weise möglich, eine Kraft-Weg-Kennlinie der Horizontaldämpfungseinrichtung 3 zu ändern und an die entsprechenden Bedürfnisse anzupassen. Insbesondere ist es nämlich möglich, eine Steigung und einen Null-Punkt der Kraft-Weg-Kennlinie der Horizontaldämpfungseinrichtung 3 besonders einfach einzustellen. Darüber hinaus ist durch den dick gezeichneten Pfeil angegeben, dass auch eine Vorspannung über die Arretierung des Exzenter-Elementes 5 in der Breitenrichtung B vorgebbar eingestellt werden kann. Mit anderen Worten handelt es sich insbesondere auch bei dem Federungssystem gemäß den Figuren 3A und 3B um ein derartiges Dämpfungssystem, mittels dessen besonders benutzerfreundlich unter anderem auch über die dort gezeigte durchgehende Öffnung 11 das Schwingungsverhalten sowie die Dämpfungseigenschaften bestimmt werden können.

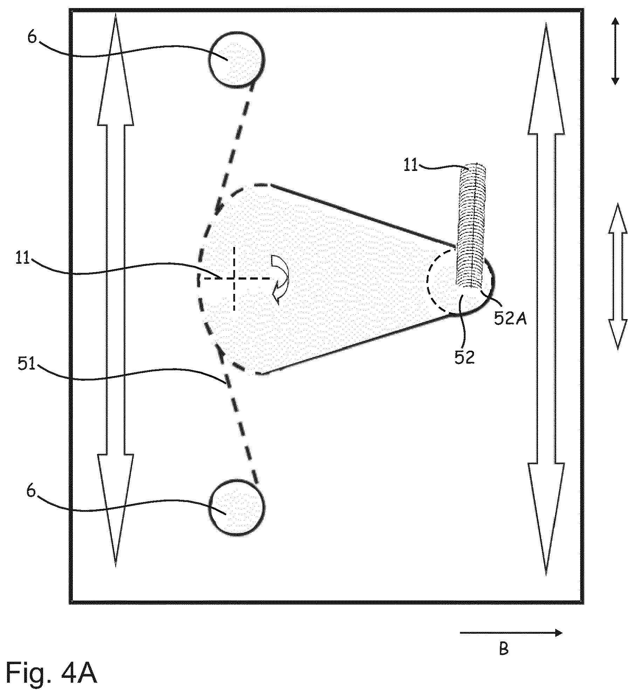

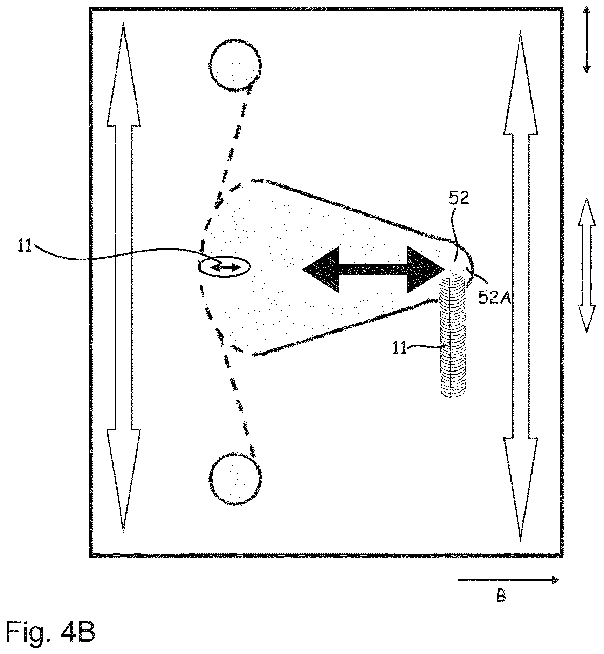

In den Figuren 4A und 4B ist im Unterschied zu den Figuren 1A bis 2B ein Exzenter-Element 5 gezeigt, welches mit einem Ende 52A eines Hebelbereiches 52 des Exzenter-Elementes 5 an einem Dämpfungselement 11 befestigt ist, wobei ein zweites Dämpfungselement 11 mechanisch fest beispielsweise mit dem Sitzunterteil 2 befestigt ist. Wird nun das Sitzoberteil 1 gegenüber dem Sitzunterteil 2 in horizontaler Richtung H ausgelenkt, dreht sich das Exzenter-Element um die Drehachse 7. Bewegt sich nun das Ende 52A des Hebelbereiches 52 beispielsweise in Drehrichtung des Exzenter-Elementes 5, wird auch das Dämpfungselement 11 gespannt, so dass über ein derartiges Dämpfungselement 11 zusätzlich eine Dämpfung und eine Kraftwirkung entgegen der Bewegungsrichtung des Sitzoberteiles 1 bereitgestellt werden kann. Beide Kraftwirkungen, welche einer jeweiligen Bewegung des Sitzoberteiles 1 gegenüber dem Sitzunterteil 2 entgegenwirken können, sind daher synergetisch aufaddierbar.

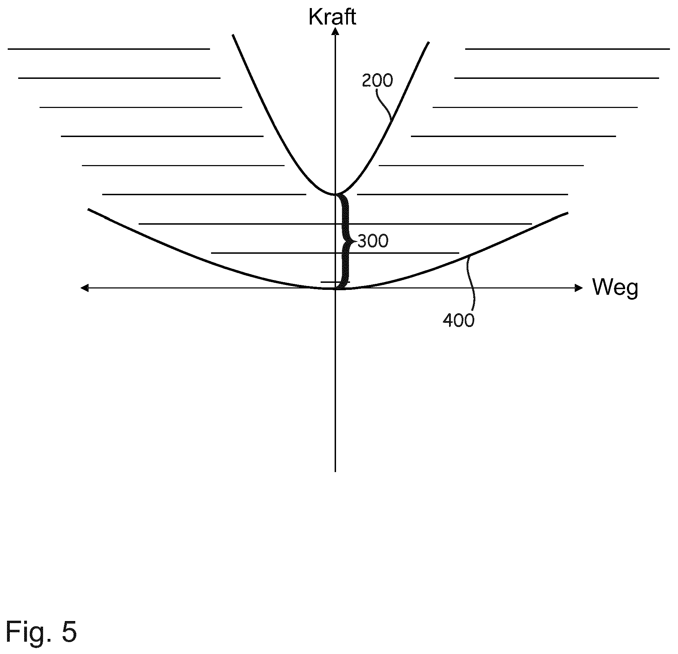

In der Figur 5 ist in einer schematischen Darstellung ein Kraft-Weg-Diagramm einer hier beschriebenen Horizontaldämpfungseinrichtung 3 gezeigt. Wie besonders einfach aus dem Kraft-Weg-Diagramm erkennbar ist, bezeichnet die Kurve 200 ein Kraft-Weg-Diagramm, bei dem bereits in der Null-Position der Spannriemen 4 eine Vorspann- und/oder Rückstellkraft 300 auf das Exzenter-Element 5 auswirkend ausbildet. Darüber hinaus ist erkennbar, dass die Kraft-Weg-Kennlinie in Form einer kraftsymmetrischen Parabel ausgebildet ist. Insbesondere ist das Kraft-Weg-Diagramm 200 symmetrisch bezüglich der Null-Position justiert. Demgegenüber bezeichnet das Kraft-Weg-Diagramm 400 ein solches Diagramm, bei dem der Spannriemen 4 in der Nullposition noch keine Rückstellkraft auf das Exzenter-Element 5 ausübt.

### Bezugszeichenliste

- H: horizontale Richtung H
- V: vertikale Richtung V
- 1: Sitzoberteil
- 2: Sitzunterteil
- 3: Horizontaldämpfungseinrichtung
- 4: Spannriemen
- 5: Exzenter-Element
- 6: Fixierelement
- 7: Drehachse
- 11: Öffnung
- 51: Abrollfläche
- 52: Hebelbereich
- 52A: Ende
- 100: Fahrzeugsitz
- 200: Kurve/Kraft-Weg-Diagramm
- 300: Rückstellkraft
- 400: Kraft-Weg-Diagramm

## Patentansprüche

1. Fahrzeugsitz (100) umfassend ein in horizontaler Richtung (H) gegenüber einem höhenverstellbaren Sitzunterteil (2) bewegliches Sitzoberteil (1), wobei das Sitzunterteil (2) zwischen dem Sitzoberteil (1) und einem Fahrzeugboden angeordnet ist und das Sitzoberteil (1) mit dem Fahrzeugboden mechanisch verbindet, und umfassend zumindest eine Horizontaldämpfungseinrichtung (3) zum Dämpfen von in horizontaler Richtung (H) in das Sitzoberteil (11) eingeprägten Schwingungen, welche ein drehbar an dem Sitzunterteil (2) oder dem Sitzoberteil (1) gelagertes Exzenter-Element (5) umfasst, **dadurch gekenntzeichnet, dass** die Horizontaldämpfungseinrichtung (3) einen in horizontaler Richtung (H) aufgespannten und unter Vorspannung an dem Sitzunterteil (2) oder dem Sitzoberteil (1) befestigten Spannriemen (4) umfasst, wobei das Exzenter-Element (5) derart mit dem Spannriemen (4) in Eingriff steht und gelagert ist, dass das Exzenter-Element (5) in horizontaler Richtung (H) aus einer Nulllage in horizontaler Richtung (H) selbstrückstellend und abrollbar an dem Spannriemen (4) gelagert ist.

2. Fahrzeugsitz (100) nach Anspruch 1,
**dadurch gekennzeichnet, dass**
der Spannriemen zwischen zwei in horizontaler Richtung beabstandet zueinander angeordneten und an dem Sitzunterteil oder dem Sitzoberteil befestigten Fixierelementen (6) eingespannt und das Exzenter-Element (5) drehbar um eine mit dem Sitzoberteil und/oder dem Sitzunterteil mechanisch fest verbundene Drehachse (7) gelagert ist, wobei über eine Drehung des Exzenter-Elements (5) um die Drehachse (7) eine dem Spannriemen zugewandte Abrollfläche (51) des Exzenter-Elements (5) zumindest teilweise an dem Spannriemen abrollbar ist.

3. Fahrzeugsitz (100) nach Anspruch 2,
**dadurch gekennzeichnet, dass**
zumindest die Abrollfläche (51) in horizontaler Richtung (H) eine Einhüllende einer Elipse bildet.

4. Fahrzeugsitz (100) nach zumindest einem der Ansprüche 2 und 3,
**dadurch gekennzeichnet, dass**
die Abrollfläche (51) des Exzenter-Elements (5) zumindest stellenweise Verzahnungen aufweist, welche zumindest teilweise in Verzahnungen des Spannriemens (4) eingreifen können.

5. Fahrzeugsitz (100) nach zumindest einem der vorhergehenden Ansprüche,
**dadurch gekennzeichnet, dass**
das Sitzoberteil (1) in horizontaler Richtung (H) relativ zu dem Sitzunterteil (2) entlang von an dem Sitzunterteil (2) befestigen Führungsschienen (8) beweglich ist.

6. Fahrzeugsitz (100) nach zumindest einem der vorhergehenden Ansprüche 2 bis 5,
**dadurch gekennzeichnet, dass**
ein Abstand der Drehachse (7) von der Abrollfläche (51) des Exzenter-Elements (5) in horizontaler Richtung (H) und/oder in einer zur horizontalten quer verlaufenden Breitenrichtung (B) einstellbar ist.

7. Fahrzeugsitz (100) nach zumindest einem der vorhergehenden Ansprüche 2 bis 6,
**dadurch gekennzeichnet, dass**
das Exzenter-Element (5) eine in vertikaler Richtung (V) durchgehende Öffnung (11) aufweist, welche einen Verstellbereich des Abstands der Drehachse (7) von der Abrollfläche (51) des Exzenter-Elements (5) festlegt.

8. Fahrzeugsitz (100) nach zumindest einem der vorhergehenden Ansprüche,
**dadurch gekennzeichnet, dass**
an dem Exzenter-Element (5) zumindest eine Ausgleichsmasse (9) zum Ausgleichen der Schwingungen des Sitzoberteils (1) und/oder des Exzenter-Elements (5) angeordnet ist.

9. Fahrzeugsitz (100) nach Anspruch 8,
**dadurch gekennzeichnet, dass**
die Ausgleichsmasse (9) an einem dem Spannriemen (4) in Breitenrichtung (B) gegenüberliegenden Hebelbereich (52) des Exzenter-Elements angeordnet ist.

10. Fahrzeugsitz (100) nach zumindest einem der vorhergehenden Ansprüche,
**dadurch gekennzeichnet, dass**
an einem Hebelbereich (52) des Exzenter-Elements (5) zumindest ein Dämpfungselement (11) verbaut ist und mit dem Hebelbereich (52) in Wirkverbindung steht, wobei das Dämpfungselement (1) einer Drehbewegung des Hebelbereichs (52) zumindest in horizontaler Richtung (H) zumindest teilweise entgegenwirkt.

## Claims

1. Vehicle seat (100) comprising an upper seat part (1) which is movable in a horizontal direction (H) relative to a vertically adjustable lower seat part (2), the lower seat part (2) being arranged between the upper seat part (1) and a vehicle floor and mechanically connects the upper seat part (1) to the vehicle floor, and comprising at least one horizontal damping device (3) for damping oscillations that are applied in the horizontal direction (H) in the upper seat part, which damping device comprises an eccentric element (5) which is rotatably mounted on the lower seat part (2) or the upper seat part (1), **characterised in that**
the horizontal damping device (3) comprises a tightening belt (4) that is stretched in the horizontal direction (H) and attached under bias to the lower seat part (2) or the upper seat part (1), the eccentric element (5) being in engagement with the tightening belt (4) and mounted such that the eccentric element (5) is mounted on the tightening belt (4) so as to be able to automatically restore and to roll in the horizontal direction (H) from a zero position in the horizontal direction (H).

2. Vehicle seat (100) according to claim 1, **characterised in that** the tightening belt is clamped between two fixing elements (6) which are arranged spaced apart from one another in the horizontal direction and are attached to the lower seat part or the upper seat part, and the eccentric element (5) is rotatably mounted about an axis of rotation (7) that is mechanically rigidly connected to the upper seat part and/or the lower seat part, a rolling surface (51) of the eccentric element (5) facing the tightening belt being rollable on the tensioning belt at least in part by rotating the eccentric element (5) about the axis of rotation (7).

3. Vehicle seat (100) according to claim 2, **characterised in that** at least the rolling surface (51) forms an envelope of an ellipse in the horizontal direction (H).

4. Vehicle seat (100) according to at least one of claims 2 and 3, **characterised in that** the rolling surface (51) of the eccentric element (5) has toothed portions at least in places, which can engage at least in part in toothed portions of the tightening belt (4).

5. Vehicle seat (100) according to at least one of the preceding claims, **characterised in that** the upper seat part (1) is movable in the horizontal direction (H) relative to the lower seat part (2) along guide rails (8) fixed to the lower seat part (2).

6. Vehicle seat (100) according to at least one of the preceding claims 2 to 5, **characterised in that** a spacing of the axis of rotation (7) from the rolling surface (51) of the eccentric element (5) is adjustable in the horizontal direction (H) and/or in a width direction (B) which is transverse to the horizontal direction.

7. Vehicle seat (100) according to at least one of the preceding claims 2 to 6, **characterised in that** the eccentric element (5) has an opening (11) which is continuous in a vertical direction (V) and defines an adjustment range of the spacing of the axis of rotation (7) from the rolling surface (51) of the eccentric element (5).

8. Vehicle seat (100) according to at least one of the preceding claims, **characterised in that** at least one balancing mass (9) for compensating the oscillations of the upper seat part (1) and/or the eccentric element (5) is arranged on the eccentric element (5).

9. Vehicle seat (100) according to claim 8, **characterised in that** the balancing mass (9) is arranged on a lever region (52) of the eccentric element opposite the tightening belt (4) in the width direction (B).

10. Vehicle seat (100) according to at least one of the preceding claims, **characterised in that** at least one damper element (11) is installed on a lever region (52) of the eccentric element (5) and is operatively connected to the lever region (52), the damper element counteracting at least in part a rotational movement of the lever region (52) at least in the horizontal direction (H).

## Revendications

1. Siège de véhicule (100) comportant une partie supérieure (1) mobile dans le sens horizontal (H) par rapport à une partie inférieure (2) réglable en hauteur, la partie inférieure (2) étant disposée entre la partie supérieure (1) et un plancher du véhicule et la partie supérieure (1) étant assemblée mécaniquement au plancher du véhicule, et comportant au moins un dispositif d'amortissement horizontal (3) qui est destiné à amortir les oscillations appliquées dans le sens horizontal (H) dans la partie supérieure du siège et qui comporte un élément excentrique (5) monté de manière rotative sur la partie inférieure (2) du siège ou la partie supérieure (1) du siège, **caractérisé en ce que** le dispositif d'amortissement horizontal (3) comporte une courroie de tension (4) tendue dans le sens horizontal (H) et fixée sous précontrainte à la partie inférieure (2) du siège ou à la partie supérieure (1) du siège, l'élément excentrique (5) étant en prise avec la courroie de tension (4) et étant monté de telle sorte que l'élément excentrique (5) est monté dans le sens horizontal (H) de manière à se repositionner lui-même dans une position neutre dans le sens horizontal (H) et de manière à pouvoir rouler sur la courroie de tension (4).

2. Siège de véhicule (100) selon la revendication 1, **caractérisé en ce que** la courroie de tension est tendue entre deux éléments de fixation (6) disposés à distance l'un de l'autre dans le sens horizontal et fixés à la partie inférieure du siège ou à la partie supérieure du siège, et l'élément excentrique (5) est monté rotatif autour d'un axe de rotation (7) relié de manière mécaniquement fixe à la partie supérieure du siège et/ou à la partie inférieure du siège, une surface de roulement (51) de l'élément excentrique (5), orientée vers la courroie de tension, pouvant rouler au moins partiellement sur la courroie de tension sous l'effet d'une rotation de l'élément excentrique (5) autour de l'axe de rotation (7).

3. Siège de véhicule (100) selon la revendication 2, **caractérisé en ce qu'**au moins la surface de roulement (51) forme dans le sens horizontal (H) une enveloppe d'une ellipse.

4. Siège de véhicule (100) selon au moins l'une des revendications 2 et 3, **caractérisé en ce que** la surface de roulement (51) de l'élément excentrique (5) comporte au moins par zones des dentures, qui peuvent engrener au moins partiellement dans des dentures de la courroie de tension (4).

5. Siège de véhicule (100) selon au moins l'une des revendications précédentes, **caractérisé en ce que** la partie supérieure (1) du siège est mobile dans le sens horizontal (H) par rapport à la partie inférieure (2) du siège le long de rails de guidage (8) fixés à la partie inférieure (2) du siège.

6. Siège de véhicule (100) selon au moins l'une des revendications précédentes 2 à 5, **caractérisé en ce qu'**une distance entre l'axe de rotation (7) et la surface de roulement (51) de l'élément excentrique (5) peut être réglée dans le sens horizontal (H) et/ou dans un sens de la largeur (B) orienté transversalement au sens horizontal.

7. Siège de véhicule (100) selon au moins l'une des revendications précédentes 2 à 6, **caractérisé en ce que** l'élément excentrique (5) comporte une ouverture (11) débouchante dans le sens vertical (V), laquelle définit une zone de réglage de la distance entre l'axe de rotation (7) et la surface de roulement (51) de l'élément excentrique (5).

8. Siège de véhicule (100) selon au moins l'une des revendications précédentes, **caractérisé en ce que** sur l'élément excentrique (5) est disposée au moins une masse d'équilibrage (9) destinée à équilibrer les vibrations de la partie supérieure (1) du siège et/ou de l'élément excentrique (5).

9. Siège de véhicule (100) selon la revendication 8, **caractérisé en ce que** la masse d'équilibrage (9) est disposée sur une zone de levier (52) de l'élément excentrique, située en face de la courroie de tension (4) dans le sens de la largeur (B).

10. Siège de véhicule (100) selon au moins l'une des revendications précédentes, **caractérisé en ce qu'**au moins un élément d'amortissement (11) est mis en place sur une zone de levier (52) de l'élément excentrique (5) et coopère avec la zone de levier (52), ledit élément d'amortissement s'opposant au moins partiellement à un mouvement de rotation de la zone de levier (52) au moins dans le sens horizontal (H).
